# FASCICULE DE BREVET EUROPEEN

(11) **EP 1 509 775 B1**
(45) Date de publication et mention de la délivrance du brevet: **12.07.2006**
(21) Numéro de dépôt: 02745466.9
(22) Date de dépôt: 22.05.2002
(51) Int. Cl.: G01P 1/00, B64C 11/20

(54) **DISPOSITIF DE DETECTION DE CHOCS SUR PALES D'HELICES AERONAUTIQUES**
VORRICHTUNG ZUR ERMITTLUNG VON SCHLAGBELASTUNGEN EINES FLUGZEUGPROPELLERS
DEVICE FOR DETECTING IMPACTS ON AERONAUTIC PROPELLER BLADES

(43) Date de publication de la demande: 02.03.2005
(73) Titulaire: RATIER-FIGEAC, F-46100 Figeac (FR)
(72) Inventeur: GAIANI, Robert, F-46100 Figeac (FR)
(74) Mandataire: Bertrand, Didier
(86) Numéro de dépôt international: PCT/FR2002/001727
(87) Numéro de publication internationale: WO 2003/104821

(56) Documents cités:
- WO-A-99/57435
- FR-A- 2 557 973
- US-A- 3 387 120
- US-A- 4 524 620

## Description

La présente invention concerne la détection de chocs sur des pales d'hélice aéronautiques.

L'arriere-plan technologique impliquant l'enregistrement des contraintes auxquelles une pale est soumise est illustré par le document WO-A- 99157435.

Le but de l'invention est de proposer un dispositif pour pouvoir connaître au cours de la durée de vie d'une pale, lors d'interventions de maintenance programmée ou en cas d'incident, si la pale a été soumise à des chocs au-delà des niveaux normalement rencontrés en exploitation normale. Il s'agit de proposer un moyen fiable, autonome, détectant et enregistrant tout choc anormal en cours d'exploitation et consultable lors d'opérations de maintenance.

L'invention atteint son but grâce à un dispositif de détection et enregistrement de chocs selon plusieurs axes sur une pale d'hélice aéronautique, caractérisé en ce qu'il comprend un accéléromètre à au moins deux axes intégré au coeur d'un pied de pale d'hélice aéronautique et un module électronique pour enregistrer au cours de la vie toute occurrence de chocs à différents niveaux prédéterminés.

Avantageusement, le dispositif comprend un accéléromètre à au moins 2 axes intégré au sommet du dispositif d'équilibrage de la pale et il enregistre les chocs dans deux plans perpendiculaires à l'axe de la pale.

On peut prévoir que les signaux de l'accéléromètre sont transmis à distance à un module électronique situé à un endroit quelconque et effectuant les enregistrements, mais, de manière avantageuse, le module électronique (et tous ses éléments annexes tels que l'alimentation qui sert aussi à l'accéléromètre) est également intégré dans le pied de la pale ; de sorte que le dispositif forme un tout autonome intégré à la pale

Ainsi, selon l'invention, de façon à déceler des chocs anormaux, les comptabiliser et les enregistrer, on intègre un accéléromètre à 2 ou 3 axes connecté à un module électronique autonome alimentant l'accéléromètre, récupérant les informations en retour de l'accéléromètre, de façon à les comparer aux niveaux prédéterminés, stockant en mémoire les occurrences au-delà des niveaux prédéterminés et intégrant un dispositif de lecture de la mémoire, soit par connexion directe, soit par transmission à distance de type UHF.

L'invention propose donc l'intégration en pied de pale d'un système entièrement autonome de mesure et d'enregistrement de chocs au-delà de seuils prédéfinis, de façon à déceler, par interrogation du système, le nombre de cas rencontrés en exploitation pour les différents seuils prédéfinis.

L'invention sera mieux comprise et d'autres avantages et caractéristiques seront mis en évidence à la lecture de la description suivante se référant aux dessins annexes sur lesquels :
la figure 1 est une vue en coupe d'un pied de pale d'hélice montrant l'implantation du système capteur/module électronique,
la figure 2 est une variante de la figure 1 au niveau du moyen de lecture du module électronique,
la figure 3 schématise le module électronique.

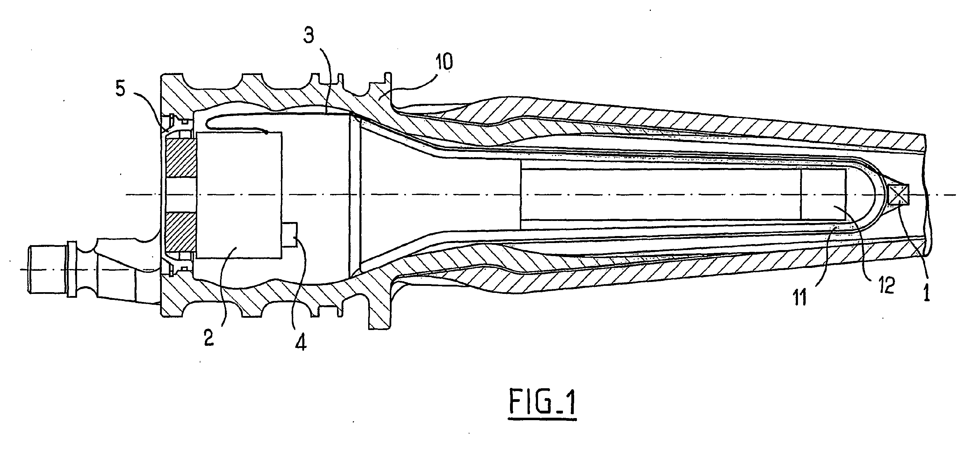

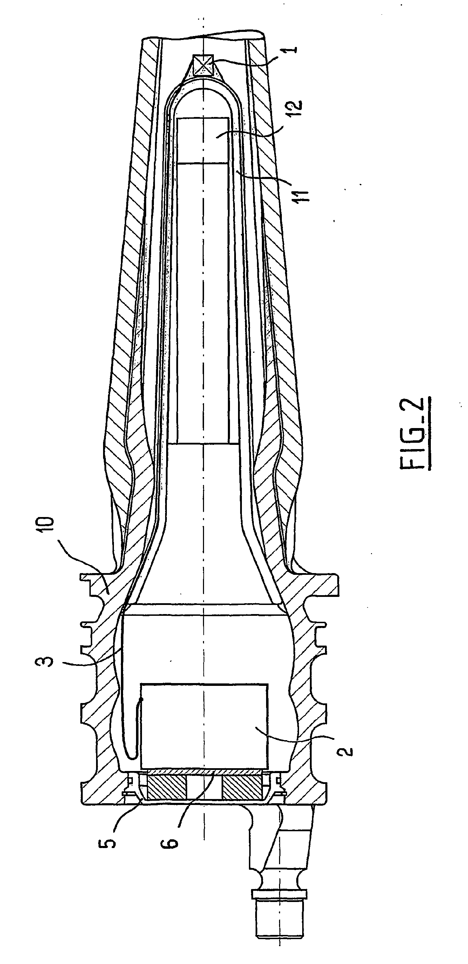

Les figures 1 et 2 montrent un exemple d'implantation du capteur de choc (accéléromètre) et du module électronique dans un pied de pale 10 d'hélice aéronautique. Le dispositif de l'invention comporte d'une part un accéléromètre 1 à 2 ou 3 axes, fixé à l'extrémité de la pièce 11 liée au pied de pale 10 et recevant les masses d'équilibrage 12 de la pale et d'autre part un module électronique 2 autonome, solidaire du couvercle 5 d'accès à la zone d'équilibrage et connecté à l'accéléromètre 1 via les fils de liaison 3.

La figure 1 présente un module électronique 2 intégrant un connecteur 4 pour la fonction de lecture des mémoires du module 2 nécessitant un démontage du couvercle 5 pour cette fonction ; l'intérêt majeur de cette version est son autonomie liée à la très faible consommation du module électronique.

La figure 2 présente un module électronique intégrant un dispositif de liaison UHF avec antenne 6 permettant une lecture à distance et au travers du couvercle 5, évitant ainsi son démontage lors de cette opération.

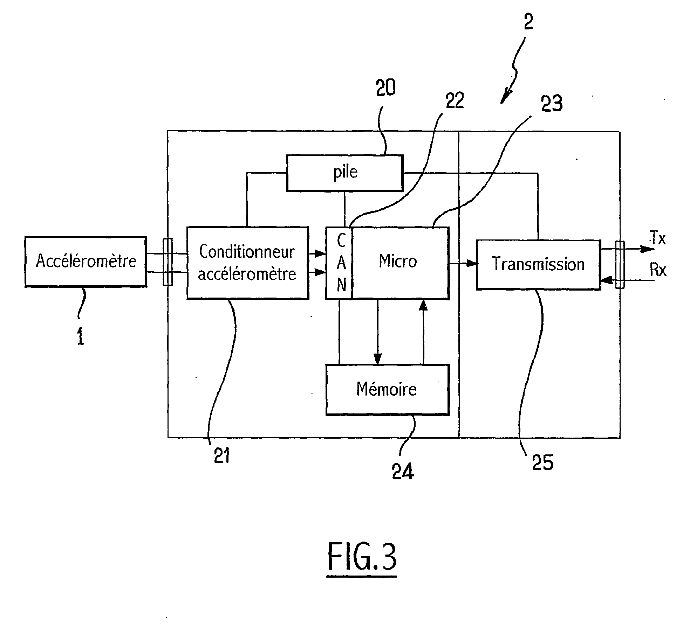

La figure 3 schématise le module électronique 2 comprenant l'alimentation en énergie 20 au moyen d'une pile de type lithium par exemple, un circuit 21 assurant le conditionnement des signaux de l'accéléromètre, le traitement des informations ou retour de celui-ci via un Convertisseur Analogique Numérique 22 Microprocesseur 23 et une mémoire non volatile 24 permettant de stocker, sous forme de tableau, pour chaque axe de l'accéléromètre 1, le nombre d'occurrences de chocs pour chaque niveau prédéfini. Pour équiper le mode de réalisation de la figure 2, le module 2 comprend aussi un bloc de transmission 25 pour communiquer avec un émetteur Tx ou un récepteur Rx.

## Revendications

1. Dispositif de détection et enregistrement de chocs selon plusieurs axes sur une pale d'hélice aéronautique, **caractérisé en ce qu'**il comprend un accéléromètre (1) à au moins deux axes intégré au coeur d'un pied de pale d'hélice aéronautique (10) et un module électronique (2) pour enregistrer au cours de la vie toute occurrence de chocs à différents niveaux prédéterminés.

2. Dispositif selon la revendication 1, **caractérisé en ce qu'**il comprend un accéléromètre (1) intégré au sommet d'un dispositif d'équilibrage (11) de la pale et enregistre les chocs dans deux plans perpendiculaires à l'axe de la pale.

3. Dispositif selon l'une quelconque des revendications 1 ou 2, **caractérisé en ce que** le module électronique (2) est également intégré dans le pied de la pale (10).

4. Dispositif selon l'une quelconque des revendications 1 à 3, **caractérisé par** une connexion directe au module électronique (2) pour lecture de l'enregistrement.

5. Dispositif selon l'une quelconque des revendications 1 à 3, **caractérisé par** une connexion à distance du module électronique (2) de type UHF pour lecture de l'enregistrement

## Claims

1. A device for detecting and recording impacts along several axes of an aeronautic propeller blade, **characterized in that** it comprises an accelerometer (1) with at least two axes, integrated at the center of an aeronautic propeller blade root (10) and an electronic module (2) to record, during its service life, any occurrence of impacts at various predetermined levels.

2. The device according to claim 1, further **characterized in that** it comprises an accelerometer (1) integrated at the top of a blade equilibration device (11) and it records impacts in two planes perpendicular to the axis of the blade.

3. The device according to either one of claims 1 or 2, further **characterized in that** electronic module (2) is also integrated into the root of blade (10).

4. The device according to any one of claims 1 to 3, further **characterized by** a direct connection to electronic module (2) for reading the recording.

5. The device according to any one of claims 1 to 3, further **characterized by** a remote connection of the electronic module (2) of the UHF type for reading the recording.

## Patentansprüche

1. Vorrichtung zur Ermittlung und Registrierung von Schlagbelastungen bzw. Stößen entlang mehrerer Achsen auf einen Flugzeugpropeller, **dadurch gekennzeichnet, daß** sie einen Beschleunigungsmesser (1) für wenigstens zwei Achsen, der am Kern eines Sockels des Flugzeugpropellers (10) integriert ist, und ein elektronisches Modul (2) zum Registrieren eines Auftretens von Schlagbelastungen auf unterschiedlichen vorbestimmten Niveaus während der gesamten Lebensdauer umfaßt.

2. Vorrichtung nach Anspruch 1, **dadurch gekennzeichnet, daß** sie einen Beschleunigungsmesser (1) umfaßt, der an dem Scheitel bzw. der Spitze einer Ausgleichs- bzw. Gleichgewichtsvorrichtung (11) des Propellers bzw. Flügels integriert ist und die Schlagbelastungen in zwei zur Achse des Propellers senkrechten Ebenen registriert.

3. Vorrichtung nach einem der Ansprüche 1 oder 2, **dadurch gekennzeichnet, daß** das elektronische Modul (2) auch im Sockel des Propellers (10) integriert ist.

4. Vorrichtung nach einem der Ansprüche 1 bis 3, **gekennzeichnet durch** eine direkte Verbindung mit dem elektronischen Modul (2) für ein Lesen der Registrierung.

5. Vorrichtung nach einem der Ansprüche 1 bis 3, **gekennzeichnet durch** eine Fernverbindung des elektronischen Moduls (2) der UHF Art für ein Lesen der Registrierung.
